# FASCICULE DE BREVET EUROPEEN

(11) **EP 1 363 513 B1**
(45) Date de publication et mention de la délivrance du brevet: **13.02.2008**
(21) Numéro de dépôt: 02718232.8
(22) Date de dépôt: 01.03.2002
(51) Int. Cl.: A23P 1/12, A23L 1/164, A23L 1/18, A23L 1/2165, A23L 1/217, A21C 11/16

(54) **PROCEDE ET INSTALLATION DE PREPARATION EN CONTINU DE PELLETS POUR LA FABRICATION DE PRODUITS ALIMENTAIRES DE TYPE SNACKS**
VERFAHREN UND VORRICHTUNG ZUR KONTINUIERLICHEN HERSTELLUNG VON PELLETS ZUR HERSTELLUNG VON SNACKPRODUKTEN
METHOD AND INSTALLATION FOR THE CONTINUOUS PREPARATION OF PELLETS FOR THE PRODUCTION OF SNACK-TYPE FOOD PRODUCTS

(30) Priorité: 02.03.2001 FR 0102913
(43) Date de publication de la demande: 26.11.2003
(73) Titulaire: CLEXTRAL, F-42700 Firminy (FR)
(72) Inventeur: DURAND, Daniel, F-42500 LE CHAMBON FEUGEROLLES (FR); BOUVIER, Jean-Marie, F-42000 SAINT ETIENNE (FR); BRUYAS, Laurent, F-43330 SAINT FERREOL D'AUROURE (FR); TABOUILLOT, Pascal, F-63200 RIOM (FR); DESPRE, Denis, F-63200 RIOM (FR)
(74) Mandataire: Lanceplaine, Jean-Claude
(86) Numéro de dépôt international: PCT/FR2002/000763
(87) Numéro de publication internationale: WO 2002/069744

(56) Documents cités:
- FR-A- 2 716 774
- US-A- 4 763 569
- US-A- 4 875 847
- US-A- 5 054 965
- US-A- 5 334 407
- US-A- 5 505 567
- US-A- 6 045 851

## Description

La présente invention concerne un procédé et une installation de préparation en continu de pellets destinés à la fabrication de produits alimentaires de type snacks à texture alvéolaire et croustillante à partir d'une matière première amylacée ayant une teneur en amidon égale ou supérieure à 60% et un taux en protéines inférieur à 13%.

L'invention facilite la production d'un produit alimentaire sous forme de pellets expansables et destinés à la fabrication de snacks à texture alvéolaire et croustillante.

Les pellets sont des produits semi-finis réalisés à partir d'une matière première amylacée et qui présentent une faible teneur en eau comprise entre 10 et 12% et une densité apparente élevée. Ces produits présentent un aspect gélatinisé et vitreux.

Ces pellets sont destinés à être expansés ultérieurement par exemple en présence d'air chaud à une température de l'ordre de 250°C ou dans un bain d'huile à une température de l'ordre de 180°C et une fois expansés, ils s'assimilent à des snacks. Les pellets ont une durée de vie de plus d'un an et pour l'utilisateur ils autorisent une gestion de production plus facile.

Ainsi que décrit dans le document FR-A-2 716 774 la production de pellets destinés à la fabrication de produits alimentaires de type snacks comporte une succession dé plusieurs étapes qui sont :
- le préconditionnement de la matière première par ajout d'eau et/ou de vapeur d'eau pour obtenir un mélange possédant une teneur en humidité comprise entre 15 et 40%,
- la cuisson du mélange permettant de transformer et de gélatiniser les amidons pour obtenir une pâte possédant une teneur en humidité comprise entre 15 et 40% et à une température comprise entre 90 et 150°C,
- la densification et la mise en forme de la pâte,
- la coupe individualisée des produits,
- le séchage par une réduction de l'humidité des produits à une teneur de l'ordre de 11 %,
- le repos du produit pour obtenir une répartition homogène de l'eau au sein du pellet, et
- l'expansion des pellets par exemple en présence d'air chaud ou dans un bain d'huile.

Jusqu'à présent, dans les procédés traditionnels, l'étape de cuisson est réalisée dans une première machine d'extrusion comprenant une vis ou deux vis co-rotatives et munie d'une filière cylindrique pour former plusieurs joncs continus de pâte qui sont coupés de façon à obtenir un produit se présentant sous la forme de billes de plusieurs millimètres de diamètre.

Les billes sont ensuite acheminés dans une seconde machine d'extrusion comprenant une vis qui permet de comprimer les grains et d'obtenir une pâte homogène qui sort de cette seconde machine d'extrusion sous la forme d'un boudin continu.

Ce boudin est directement transféré dans un moule pour former plusieurs joncs qui sont découpés en pellets de forme désirée.

Mais, ce procédé est un procédé en deux étapes qui comporte une première machine d'extrusion de cuisson et une seconde machine d'extrusion de formage entraînant de ce fait des moyens de transfert entre les deux machines et des moyens de maintien de la température du produit ce qui augmente le temps de fabrication des pellets qui est de l'ordre de 4 à 8 minutes.

De plus, le temps de démarrage de l'installation est relativement long de l'ordre d'une heure étant donné le nombre de machines composant cette installation.

Enfin, la matière première utilisée dans les procédés connus est une matière première amylacée qui comporte au moins une partie modifiée et/ou prégélatinisée qui est une matière première onéreuse.

L'invention a pour but d'éviter ces inconvénients en proposant un procédé et une installation de préparation en continu de pellets destinés à la fabrication de produits alimentaires de type snacks, sans rupture de charge dans la ligne de fabrication et permettant d'obtenir un produit d'excellente qualité, tout en réduisant le temps de fabrication et la consommation d'énergie.

L'invention a donc pour objet un procédé de préparation en continu de pellets destinés à la fabrication de produits alimentaires de type snacks à texture alvéolaire et croustillante à partir d'une matière première amylacée naturelle ayant une teneur en amidon égale ou supérieure à 60% et un taux en protéines inférieur à 13%, caractérisé en ce que :
- on effectue un préconditionnement de la matière par ajout d'eau et/ou de vapeur d'eau pour amener la teneur en humidité de ladite matière première entre 15 et 40%,
- on introduit en continu la matière dans une machine d'extrusion à deux vis co-rotatives et co-pénétrantes, entraînées en rotation à une vitesse supérieure à 200 tr/mn autour d'axes parallèles à l'intérieur d'un fourreau, le temps de séjour de la matière dans la machine d'extrusion étant compris entre 30 secondes et 1 mn30,
- on effectue successivement dans le fourreau de la machine d'extrusion :
   . une étape d'alimentation et de transport de la matière première,
   . une étape de cuisson de cette matière première à une température comprise entre 90 et 150°C et avec un temps de séjour de ladite matière égal ou supérieur à 25 secondes, ladite étape de cuisson comprenant entre deux et cinq étapes de malaxage pour former une pâte cuite ayant un taux d'humidité compris entre 24 et 35%,
   . une étape de dégazage et une étape de pompage et de refroidissement de la pâte à une température comprise entre 80 et 100°C,
- on forme à la sortie de la machine d'extrusion un boudin continu de pâte ayant un taux d'humidité compris entre 20 et 30%,
- on oriente le boudin de pâte dans une direction verticale et un sens d'écoulement de haut en bas dans une chambre d'orientation et simultanément on régule le flux de la pâte,
- on introduit la pâte dans une chambre de répartition et, à ta sortie de cette chambre, on pousse la pâte au travers d'un moule à sorties multiples pour former une multitude de joncs continus ayant la forme désirée,
- on coupe transversalement lesdits joncs pour former les pellets ayant un taux d'humidité compris entre 20 et 30%, et
- on effectue un séchage progressif des pellets à une température comprise entre 50 et 110°C avec un taux d'hygrométrie compris entre 40 et 80% pendant plus de trois heures pour obtenir des pellets présentant un taux d'humidité compris entre 10 et 12%.

L'invention a également pour objet une installation de préparation en continu de pellets destinés à la fabrication de produits alimentaires de type snacks à texture alvéolaire et croustillante à partir d'une matière première amylacée naturelle ayant une teneur en amidon égale ou supérieure à 60% et un taux en protéines inférieur à 13%, caractérisée en ce qu'elle comprend :
- un préconditionneur de mélange de la matière première avec de l'eau et/ou de la vapeur d'eau pour amener la teneur en humidité de ladite matière première entre 15 et 40%,
- une machine d'extrusion formée de deux vis co-rotatives et co-pénétrantes entraînées en rotation à une vitesse supérieure à 200 tr/mn autour d'axes parallèles à l'intérieur d'un fourreau de forme allongée muni d'alésages sécants, la longueur des vis étant comprise entre 32 et 48 fois le diamètre d'une desdites vis et lesdites vis déterminant de l'amont à l'aval :
   . une zone d'alimentation en continu dans le fourreau de la matière première préconditionnée, et de transport de cette matière première,
   . une zone de cuisson de cette matière première à une température comprise entre 90 et 150°C et avec un temps de séjour de ladite matière première égal ou supérieur à 25 secondes, la longueur des vis dans la zone de cuisson étant comprise entre 18 et 30 fois le diamètre d'une desdites vis et cette zone de cuisson comprenant deux à cinq éléments de vis de malaxage pour obtenir une pâte cuite ayant un taux d'humidité compris entre 24 et 35%,
   . une zone de dégazage et une zone de pompage et de refroidissement de la pâte cuite à une température comprise entre 80 et 100°C,
   . une zone de sortie de la pâte de la machine d'extrusion pour former un boudin continu de pâte cuite ayant un taux d'humidité compris entre 20 et 30%,
- une chambre d'orientation du boudin de pâte cuite dans une direction verticale et un sens d'écoulement de haut en bas et de régulation du flux de la pâte,
- une chambre de répartition de la pâte cuite munie, à sa sortie, d'un moule à sorties multiples pour former plusieurs joncs continus ayant la forme désirée,
- des moyens de découpage transversal desdits joncs pour former les pellets, et
- des moyens de séchage progressif des pellets à une température comprise entre 50 et 110°C avec un taux d'hygrométrie compris entre 40 et 80% pendant plus de trois heures pour obtenir des pellets présentant un taux d'humidité compris entre 10 et 12%.

D'autres caractéristiques et avantages de l'invention apparaîtront au cours de la description qui va suivre et faite en référence aux dessins annexés, sur lesquels:
la Fig. 1 est une vue schématique en élévation d'une installation de préparation en continu de produits alimentaires sous forme de pellets, conforme à l'invention,
la Fig. 2 est une vue en coupe dans un plan vertical passant par l'axe d'une vis d'une machine d'extrusion de l'installation conforme à l'invention,
- la Fig. 3 est une vue en coupe longitudinale, de la machine d'extrusion,
- la Fig. 4 est une vue en coupe transversale selon la ligne 4.4 de la Fig.3,
- la Fig. 5 est une vue schématique en perspective d'un tronçon des vis de la zone de cuisson et de mélange de la machine d'extrusion,
- la Fig. 6 est une vue schématique en coupe des chambres d'orientation et de répartition de la pâte ainsi que des moyens de coupe de l'installation conforme à l'invention.

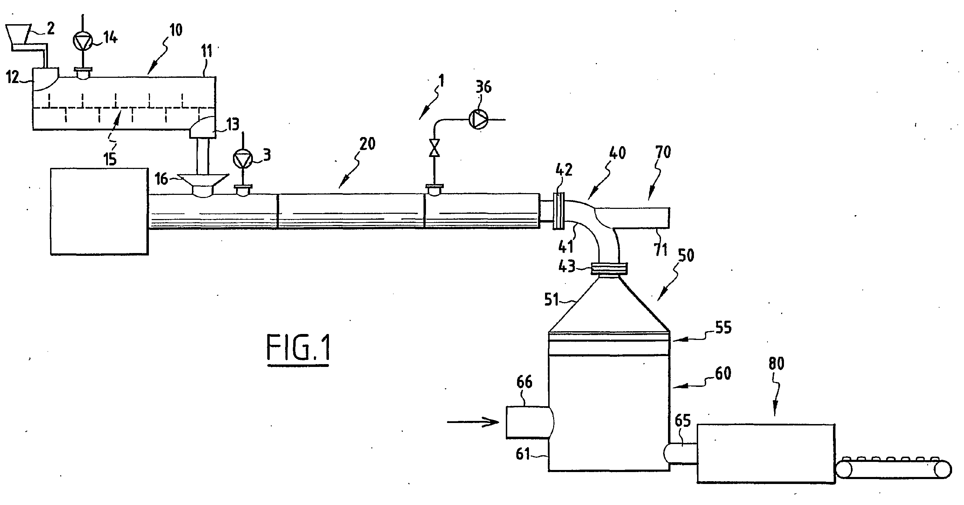

Sur la Fig. 1, on a représenté schématiquement une installation de préparation en continu de pellets destinés à la fabrication de produits alimentaires de type snacks à texture alvéolaire et croustillante à partir d'une matière première amylacée naturelle dont la teneur en humidité est comprise entre 9 et 14%. Cette matière première a de préférence une teneur en amidon égale ou supérieure à 60% et un taux en protéines inférieur à 13%.

La matière première amylacée utilisable dans le cadre de l'invention peut être une matière à base de céréales, telle que par exemple une farine de blé, de maïs, de riz, d'orge ou d'avoine ou un mélange de ces farines ou bien cette matière peut être une farine à base de tubercules, comme par exemple du manioc, de la pomme de terre ou un mélange de ces produits. Cette matière première amylacée peut contenir jusqu'à 100% d'amidon natif et sa granulométrie est comprise entre 50 et 800 microns.

Par amidon natif, on entend un amidon qui n'a subi aucun traitement physique et/ou chimique préalable et peut être utilisé sans aucune modification.

D'une manière générale, l'installation désignée dans son ensemble par la référence 1 comprend :
- un préconditionneur 10 alimenté en matière première par un doseur 2,
- une machine d'extrusion désignée par la référence générale 20 qui, comme on le verra ultérieurement, est formée de deux vis co-rotatives et co-pénétrantes,
- une chambre d'orientation 40 du boudin de pâte sortant de la machine d'extrusion 20,
- une chambre de répartition 50 de la pâte dans un moule 55 à sorties multiples,
- des moyens 60 de découpage transversal pour former les pellets, et
- des moyens 80 de séchage des pellets pour obtenir des pellets présentant un taux d'humidité compris entre 10 et 12%.

L'installation peut également comporter des moyens, non représentés, d'expansion de ces pellets en présence d'air chaud à une température d'environ 250°C ou dans un bain d'huile à une température de l'ordre de 180°C pour obtenir des snacks présentant un taux d'humidité inférieur à 3%.

Le préconditionneur est formé d'une enceinte 11 munie à son extrémité amont d'un orifice 12 d'introduction de la matière première dans l'enceinte 11 au moyen du doseur 2 et, à son extrémité avale, d'un orifice 13 de sortie de la matière première dont la teneur en humidité a été portée à une valeur comprise entre 15 et 40%. Pour cela, l'enceinte 11 du préconditionneur 10 est reliée à des moyens d'alimentation en eau et/ou en vapeur d'eau constitués par exemple par une pompe 14 et la matière première est mélangée dans l'enceinte 11 à l'eau et/ou à la vapeur d'eau et transportée vers l'orifice de sortie 13 à l'aide de deux arbres munis de pales réglables et désignés par la référence 15. Du sel ou du sucre peut également être introduit avec la matière première dans l'enceinte 11 du préconditionneur.

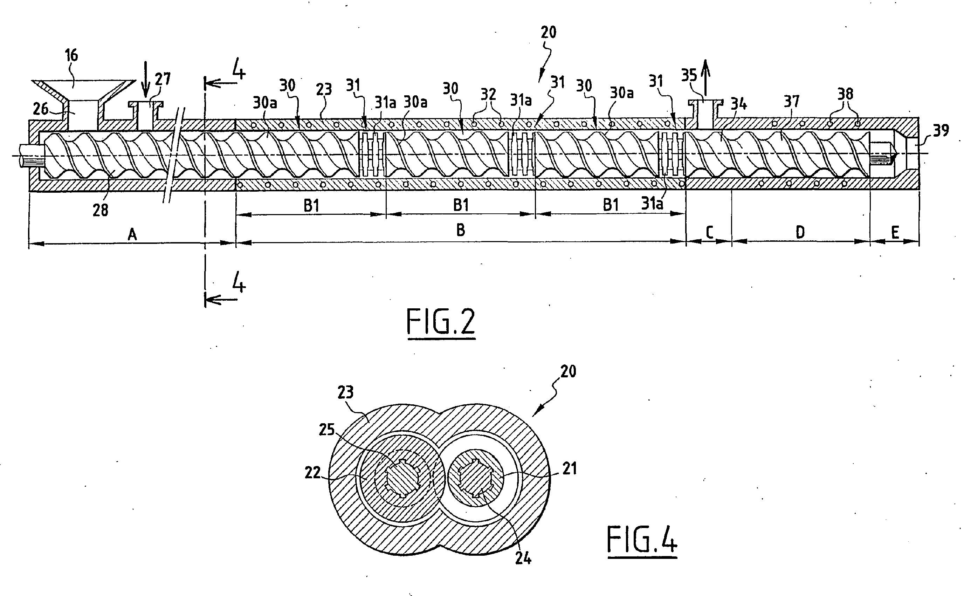

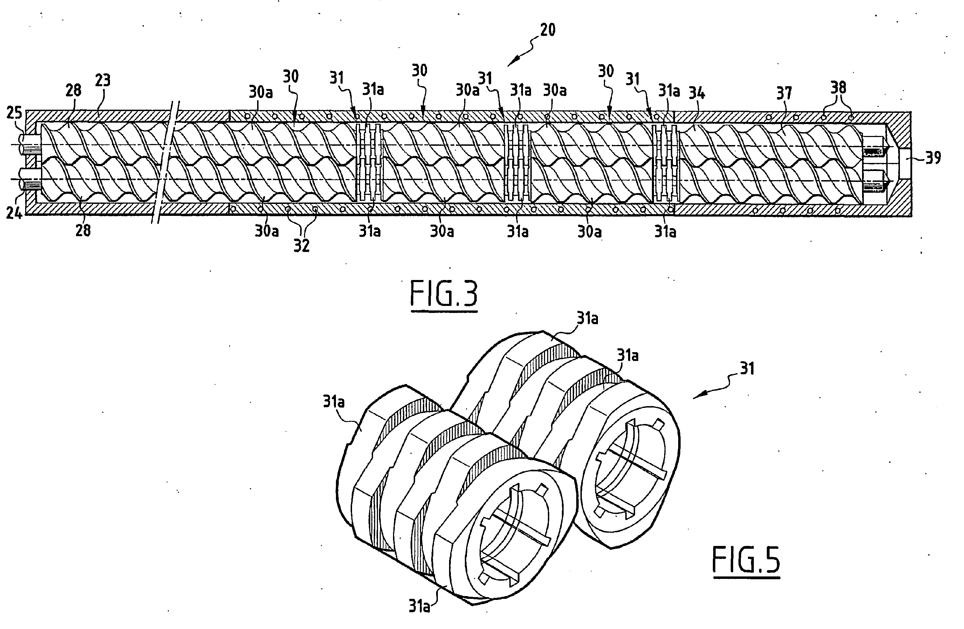

La matière première amylacée ainsi humidifiée et/ou plus ou moins gélatinisée est introduite dans la machine d'extrusion 20 au moyen d'une trémie d'alimentation 16 et cette machine est du type à deux vis co-rotatives et co-pénétrantes, ainsi que représentée sur les figures 2 et 3.

La machine d'extrusion 20 comprend deux vis 21 et 22 entraînées en rotation autour de leurs axes par un moteur et un réducteur, non représentés, à l'intérieur d'une enceinte allongée formant un fourreau 23 qui les enveloppe.

Les vis 21 et 22 sont munies notamment de filets hélicoïdaux ou d'éléments de traitement de la matière première introduite dans le fourreau 23, comme on le verra ultérieurement, qui engrènent les uns dans les autres et la paroi interne dudit fourreau 23 forme deux lobes cylindriques sécants de diamètre intérieur légèrement supérieur au diamètre extérieur des filets et des éléments de traitement.

Les deux vis 21 et 22 sont entraînées à la même vitesse de rotation et dans le même sens de telle sorte que ces deux vis sont identiques, les filets et les éléments de traitement étant simplement décalés les uns par rapport aux autres.

Ainsi que représenté notamment à la Fig. 4, les vis 21 et 22 sont avantageusement constituées d'arbres cannelés, respectivement 24 et 25, sur lesquels sont empilés les tronçons de vis.

L'alésage intérieur de ces tronçons de vis est muni de cannelures correspondant à celles de l'arbre et la partie extérieure est munie de filets hélicoïdaux ou d'éléments de traitement de la matière dont le pas et la configuration diffèrent selon le tronçon considéré pour le traitement et le transport de cette matière.

On peut ainsi disposer d'un grand nombre de tronçons ayant des configurations différentes selon le type de traitement à réaliser sur la matière.

La machine d'extrusion 20 représentée sur les Figs. 2 et 3 comprennent une zone A d'introduction en continu dans le fourreau 23 de la matière première amylacée préhumidifiée et de transport de cette matière vers l'aval de ladite machine d'extrusion 20.

Dans cette zone A, le fourreau 23 est percé, à son extrémité amont par rapport au sens d'écoulement de la matière, d'un orifice 26 surmonté d'une trémie 16 dans laquelle se déverse en continu la matière première distribuée par le préconditionneur 10.

Dans la zone d'introduction A, les vis 21 et 22 sont munies de filets 28 à pas large afin d'assurer le transport de la matière première introduite par l'orifice 26 qui s'ouvre largement sur les deux vis 21 et 22 et afin de répartir ladite matière dans les filets des vis.

Dans l'exemple de réalisation représenté sur les figures, le fourreau 23 comporte, au début de la zone A d'alimentation et de transport, au moins un orifice 27 d'injection d'eau relié à une pompe d'alimentation 3 pour ajuster la teneur en humidité de la pâte en fonction de la teneur en humidité de la pâte à obtenir à la sortie de la machine d'extrusion 20 et qui doit être comprise entre 20 et 27%. Dans cette zone A, du fait du malaxage de la matière par les filets 28, la température de la matière s'élève progressivement jusqu'à une température de l'ordre de 130°C.

Ainsi, la matière est transportée vers l'aval de la machine d'extrusion 20 dans une zone B de mélange et de cuisson de cette matière qui est chauffée à une température comprise entre 90 et 150°C pour obtenir à la sortie de cette zone B une pâte.

Selon le type de matière première la zone B de cuisson comprend entre 2 et 5 éléments de vis de malaxage.

La zone B de mélange et de cuisson se compose dans l'exemple de réalisation représenté sur les Figs. 2 et 3, de trois tronçons B1 identiques et placés les uns à la suite des autres.

Chaque tronçon B1 comprend, d'une part, une première partie 30 munie de filets hélicoïdaux 30a s'imbriquant les uns dans les autres et, d'autre part, une seconde partie 31 munie d'éléments malaxage bi-lobes en forme de losange, comme représentés à la figure 5. Les sommets de ces éléments bi-lobes 31 a sont tronqués pour réaliser un passage contrôlé de la matière et ces éléments bi-lobes de chaque vis sont décalés de 90° les uns par rapport aux autres. De plus, les éléments bi-lobes 31 a des deux vis 21 et 22 s'imbriquent les uns dans les autres.

La longueur de chaque élément bi-lobes 31 a est sensiblement égale au diamètre d'une des vis 21 ou 22.

Ainsi, la matière sortant de la première zone A subit dans la première partie 30 du premier tronçon B1 une compression grâce aux filets 30a et ensuite cette matière subit dans la deuxième partie 31 dudit tronçon B1 un cisaillement contrôlé grâce aux éléments bi-lobes 31 a.

De ce fait, la matière subit dans la zone B une succession contrôlée de compression et de cisaillement et tout au long de cette zone B une élévation de sa température de 90 à 150°C ce qui permet d'obtenir à la sortie de cette zone B une pâte cuite.

Pour élever progressivement la température de la matière jusqu'à environ 150°C, le fourreau 23 de la machine d'extrusion 20 est équipé de moyens de chauffage.

Ainsi que représenté sur les figures 2 et 3, les moyens de chauffage sont constitués par un circuit 32 de circulation d'un fluide caloporteur, ou par des résistances électriques disposées autour du fourreau et s'étendant sur toute la longueur de la zone B.

Ces moyens de chauffage peuvent également être constitués par un système de chauffage par induction.

La longueur des vis 21 et 22 dans la zone B de mélange et de cuisson est comprise entre 18 et 30 fois le diamètre d'une desdites vis. Le temps de séjour de la matière dans la zone B de cuisson est égal ou supérieur à 25 secondes et le taux d'humidité de la pâte à la sortie de cette zone est compris entre 24 et 35%.

Selon une variante, et notamment dans le cas de céréales, la zone B peut comporter après le dernier tronçon B1 au moins un tronçon supplémentaire comprenant une première partie munie de filets hélicoïdaux classiques s'imbriquant les uns dans les autres et une seconde partie formée d'un élément de cisaillement constitué de contre-filets de type connu.

A la sortie de cette zone B, la pâte est transférée dans une zone C de dégazage dans laquelle les vis 21 et 22 sont munies de filets hélicoïdaux 34 et dans laquelle le fourreau 23 est percé d'un orifice 35.

Au cours de son transfert dans la zone C, la pâte cuite subit un dégazage soit naturel, soit accéléré et dans ce cas l'orifice 35 est relié à une pompe à vide 36, ainsi que représenté à la Fig. 1. Ce dégazage permet donc d'extraire de l'eau sous forme de vapeur contenue dans la pâte et entraîne un refroidissement de cette pâte.

A la suite de cette zone C de dégazage, la machine d'extrusion 20 comporte une zone D de pompage et de refroidissement de la pâte à une température d'environ 90°C à la sortie de cette machine d'extrusion 20.

Dans cette zone D, les vis 21 et 22 de la machine d'extrusion sont pourvues de filets hélicoïdaux 37 et le fourreau 23 comporte des moyens de refroidissement qui sont constitués par exemple par un circuit 38 de circulation d'un fluide de refroidissement et ménagé dans ledit fourreau 23.

La pâte est donc pompée par les filets 37 des vis 21 et 22 et transférée dans une zone E de formage d'un boudin continu de pâte. Pour cela, le fourreau 23 comporte un orifice 39 de sortie de la pâte dont la teneur en humidité est comprise entre 20 et 30%.

La longueur des vis 21 et 22 dans les zones C et D est comprise entre 8 et 16 fois le diamètre d'une desdites vis.

Le temps de séjour de la matière dans la machine d'extrusion est compris entre 30 secondes et 1 mn30 et la vitesse de rotation des vis est supérieure à 200 tr/mn et de préférence supérieure à 250 tr/mn dans le cas où cette matière première est constituée par des céréales.

Le fourreau 23 peut comporter, à la fin de la zone D, un orifice non représenté, d'injection dans la matière première de colorants et/ou d'arômes.

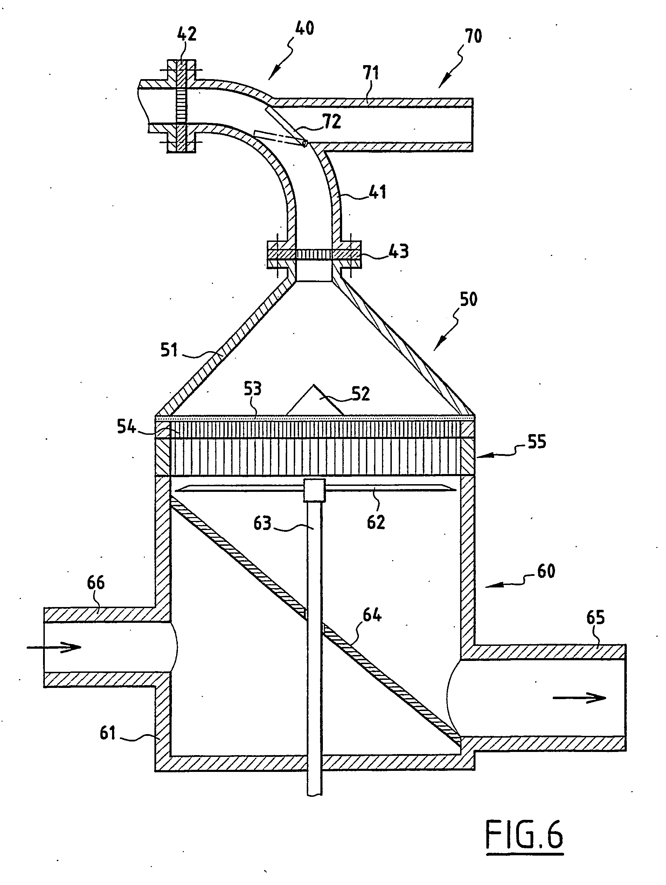

Ainsi que représenté sur les Figs. 1 et 6, la pâte qui sort de la machine d'extrusion 20 à une température comprise de l'ordre de 90°C est transférée successivement dans la chambre d'orientation 40 et dans la chambre de répartition 50. La chambre d'orientation 40 peut être pourvue de moyens d'injection dans la pâte de colorants et/ou d'arômes.

Ces chambres 40 et 50 sont pourvues de moyens de type connu, non représentés, de régulation de la température de la pâte entre 80 et 100°C.

La chambre d'orientation 40 est formée par un conduit 41 en forme de coude permettant d'orienter le boudin de pâte sortant de la machine d'extrusion 20 dans une direction verticale, c'est à dire perpendiculairement à l'axe de la machine d'extrusion 20, et un sens d'écoulement de haut en bas.

De préférence, la chambre d'orientation 40 est pourvue de moyens de régulation de la distribution de la pâte qui sont formés, dans l'exemple de réalisation représenté à la Fig. 6, par une première grille 42 disposée à l'entrée de cette chambre d'orientation 40 et par une seconde grille 43 disposée à la sortie de ladite chambre d'orientation 40.

Selon une variante, les moyens de régulation de la distribution de la pâte peuvent être formés par une grille 42 disposée à l'entrée de cette chambre 41 ou par une grille 43 disposée à la sortie de ladite chambre 41.

La ou les grilles 42 et 43 sont disposées perpendiculairement au sens d'écoulement de la pâte et permettent de réguler la distribution de la pâte qui est poussée à la sortie de la machine d'extrusion 20 et cette pâte, après son passage dans la chambre d'orientation 40, est transférée dans la chambre de répartition 50.

Cette chambre de distribution 50 comprend un cône extérieur 51 évasé vers le bas et un cône intérieur mâle ménageant entre eux un espace de répartition de la pâte. Cette chambre 50 comporte également, au-dessus du moule 55, un filtre 53 de retenue des particules supérieures à 800 microns contenues dans la pâte et une grille 54 de prémoulage pour ajuster les vitesses de tréfilation de la pâte à travers les orifices du moule 55.

De manière classique, ce moule comporte des inserts interchangeables, non représentés, qui déterminent la forme du produit. Ainsi, la pâte se répartit dans la chambre 50, puis traverse successivement le filtre 53, la grille de prémoulage 54 et le moule 55 pour former une multitude de joncs continus ayant la forme désirée.

A la sortie du moule 55, les joncs débouchent dans un caisson 61 qui contient les moyens 60 de découpage transversal de ces joncs pour former les pellets.

Ces moyens 60 de découpage sont formés par exemple par au moins une lame 62 flexible et antiadhésive qui est entraînée en rotation par un arbre 63 relié à un moto-réducteur, non représenté. Cette lame 62 est disposée dans un plan s'étendant perpendiculairement au sens de défilement des fils de pâte à la sortie du moule 55.

Les pellets ainsi coupés tombent sur une grille 64 et sont évacués par un conduit de sortie 65 au moyen d'un système de soufflage d'air régulé en température et en débit, non représenté, admis dans le caisson 61 par un conduit 66. L'air régulé en température admis dans le caisson 61 par le conduit 66 traverse la grille 64 et entraîne les pellets à l'extérieur dudit caisson 61 par le conduit 65 et ces pellets sont transférés vers des postes de séchage, puis vers des postes de conditionnement dans des emballages hermétiques.

Selon un mode de réalisation préférentiel, l'installation comprend des moyens 70 d'évacuation de la pâte à la sortie de la machine d'extrusion 20 et disposé avant la chambre de répartition 50.

Ainsi que représenté à la Fig. 6, ces moyens 70 d'évacuation sont formés par un conduit de dérivation 71 débouchant dans la chambre d'orientation 40 et muni d'un volet 72 déplaçable entre une position d'obturation du conduit de dérivation 71, comme représentée en trait plein à la Fig. 6, pour diriger le boudin de pâte vers la chambre de répartition 50 et une position d'obturation du conduit 41 de ladite chambre d'orientation 40, comme représentée en pointillés sur cette figure, pour diriger le boudin de pâte vers le conduit d'évacuation 71.

Ainsi, tant que la teneur en eau de la pâte à la sortie de la machine d'extrusion 20 n'atteint pas une valeur prédéterminée et généralement comprise entre 20 et 30%, c'est à dire au démarrage de cette machine d'extrusion 20, le volet 72 est basculé par des moyens de commande de type classique, non représentés, dans la position d'obturation du conduit 41 de la chambre de répartition 40 de façon à diriger la pâte dans le conduit 71 et éviter de ce fait que cette pâte traverse la chambre de répartition 50 et pollue l'ensemble de coupe. Dès que la teneur en humidité de la pâte atteint la valeur prédéterminée, le volet 72 est ramené dans sa position initiale d'obturation du conduit d'évacuation 71 de façon à canaliser cette pâte vers la chambre de distribution 50.

Grâce à ce dispositif, le temps de démarrage de l'installation est plus court et de l'ordre de 10 à 20 minutes alors que, dans les installations classiques, il est d'environ une heure. Ce gain de temps est également du au fait que l'installation ne comporte qu'une seule machine d'extrusion.

La vitesse de rotation des vis 21 et 22 de la machine d'extrusion 20 est supérieure à 200 tr/mn selon la matière première traitée et le profil de ces vis 21 et 22 est adapté pour réaliser un mélange, un cisaillement et une montée en pression progressive et contrôlée de la matière dans la machine d'extrusion.

Une grande variété de matière première à base de céréales et ou de tubercules peut être utilisée, seule ou en mélange.

Le produit alimentaire de type pellet obtenu par le procédé selon l'invention contient :
- 40 à 99% en poids de matière contenant de l'amidon,
- 0 à 30% en poids d'amidon natif ou modifié,
- 0 à 60% en poids d'autres ingrédients non amylacés,
- 0 à 5% en poids de sel.

Si le pourcentage d'amidon total contenu dans la formulation est inférieur ou égal à 60%, l'expansion ultérieure du produit fini est moindre et donne une texture ferme et craquante. A l'inverse, si le pourcentage d'amidon est supérieur à 60%, l'expansion est plus importante et la texture plus aérée et fondante.

L'installation comprend également des moyens 80 de séchage des pellets par séchage progressif de 50 à 110°C avec un taux d'hygrométrie compris entre 40 et 80% pendant plus de trois heures pour obtenir les snacks présentant un taux d'humidité homogène entre 10 et 12%.

Ensuite les pellets sont expansés pour obtenir des snacks à texture alvéolaire et croustillante présentant un taux d'humidité inférieur ou égal à 3%.

L'installation selon l'invention permet donc de préparer en continu des pellets destinés à la fabrication de produits alimentaires de types snacks à texture alvéolaire et croustillante à partir d'une matière première amylacée naturelle dont différentes formulations sont mentionnées dans le tableau ci-dessous.

| **FORMULATIONS** | **TYPE D'INGREDIENTS** | **%** |
|---|---|---|
| | **Farine de maïs** | **98** |
| **1** | **Sel** | **2** |
| | **Farine de blé** | **98** |
| **2** | **Sel** | **2** |
| | **Fécule de pomme de terre** | **88** |
| **3** | **Granules ou flocons p. de terre** | **10** |
| | **Sel** | **2** |
| | **Farine de maïs** | **93** |
| **4** | **Amidon de maïs** | **5,5** |
| | **Sel** | **1** |
| | **Emulsifiant** | **0,5** |
| | **Amidon de maïs** | **50** |
| **5** | **Amidon de blé** | **25,5** |
| | **Fécule de pomme de terre** | **12** |
| | **Fécule de manioc** | **12** |
| | **Emulsifiant** | **0,5** |

A titre d'exemple, les paramètres utilisés dans l'installation selon l'invention pour la formulation N°1 sont les suivants:
- quantité de matière entrant dans le préconditionneur ; 200 kg/h
- humidité de la matière première dans le préconditionneur ; 11,5 %
- vitesse de rotation des arbres du préconditionneur ; 150 tr/mn
- humidité de la matière sortant du préconditionneur ; 23 %
- température de la matière sortant du préconditionneur ; 75°C
- vitesse de vis de la machine d'extrusion ; 290 tr/mn
- humidité de la matière dans la zone d'alimentation avant la zone de mélange et cuisson ; 29 %
- température de la matière dans la zone d'alimentation avant la zone de mélange et de cuisson ; 75 °C
- température de la matière dans la zone de mélange et cuisson ; 130 °C
- température de la pâte dans la zone de dégazage ; 110 °C
- température de la pâte dans la zone de pompage et refroidissement ; 95 °C
- humidité de la pâte dans la zone de pompage et refroidissement ; 27%
- température du pellet coupé et formé sortant du moule ; 90-95 °C
- humidité du pellet coupé et formé sortant du moule ; 21 %
- vitesse de tréfilation du pellet coupé et formé sortant du moule ; 85 cm/mn
- temps de séjour moyen de la matière à l'entrée dans l'extrudeuse jusqu'à la sortie du moule. 60-90 sec

Les pellets ainsi fabriqués et ensuite séchés sont des produits semi-finis à faible teneur en eau généralement comprise entre 10 et 12% et à densité apparente élevée de l'ordre de 200 à 700 g/1. lls présentent un aspect gélatinisé et vitreux et ils sont destinés à être expansés ultérieurement.

En effet, ces produits ont une longue conservation du fait de leur faible humidité.

## Revendications

1. Procédé de préparation en continu de pellets destinés à la fabrication de produits alimentaires de type snacks à texture alvéolaire et croustillante à partir d'une matière première amylacée naturelle ayant une teneur en amidon égale ou supérieure à 60% et un taux en protéines inférieur à 13%, **caractérisé en ce que** :
- on effectue un préconditionnement de la matière par ajout d'eau et/ou de vapeur d'eau pour amener la teneur en humidité de ladite matière première entre 15 et 40%,
- on introduit en continu la matière dans une machine d'extrusion (20) à deux vis (21, 22) co-rotatives et co-pénétrantes, entraînées en rotation à une vitesse supérieure à 200tr/mn autour d'axes parallèles à l'intérieur d'un fourreau (23), le temps de séjour de la matière dans la machine d'extrusion étant compris entre 30 secondes et 1 mn30,
- on effectue successivement dans le fourreau (23) de la machine d'extrusion (20) :
. une étape d'alimentation et de transport de la matière première,
. une étape de cuisson de cette matière première à une température comprise entre 90 et 150°C et avec un temps de séjour de ladite matière égal ou supérieur à 25 secondes, ladite étape de cuisson comprenant entre deux et cinq étapes de malaxage pour former une pâte ayant un taux d'humidité compris entre 24 et 35%,
. une étape de dégazage et une étape de pompage et de refroidissement de la pâte à une température comprise entre 80 et 100°C,
- on forme à la sortie de la machine d'extrusion (20) un boudin continu de pâte ayant un taux d'humidité compris entre 20 et 30%,
- on oriente le boudin de pâte dans une direction verticale et un sens d'écoulement de haut en bas dans une chambre d'orientation (40) et simultanément on régule le flux de la pâte,
- on introduit la pâte dans une chambre de répartition (50) et, à la sortie de cette chambre, on pousse la pâte au travers d'un moule à sorties multiples pour former une multitude de joncs continus ayant la forme désirée,
- on coupe transversalement lesdits joncs pour former les pellets ayant un taux d'humidité compris entre 20 et 30%, et
- on effectue un séchage progressif des pellets à une température comprise entre 50 et 110°C avec un taux d'hygrométrie compris entre 40 et 80% pendant plus de trois heures pour obtenir des pellets présentant un taux d'humidité compris entre 10 et 12%.

2. Procédé selon la revendication 1, **caractérisé en ce qu'**après le séchage des pellets, on effectue une expansion de ces pellets en présence d'air chaud à une température d'environ 250°C ou dans un bain d'huile à une température de l'ordre de 180°C.

3. Procédé selon la revendication 1 ou 2, **caractérisé en ce que** la matière première amylacée est à base de céréales et/ou de tubercules.

4. Procédé selon l'une quelconque des revendications 1 à 3, **caractérisé en ce que** la matière première amylacée possède une granulométrie comprise entre 50 et 800microns.

5. Procédé selon la revendication 1, **caractérisé en ce qu'**au début de l'étape d'alimentation et de transport, on injecte dans la machine d'extrusion (20) de l'eau pour ajuster la teneur en humidité de la pâte en fonction de la teneur en humidité de la pâte à obtenir à la sortie de la machine d'extrusion (20).

6. Procédé selon l'une quelconque des revendications 1 à 5, **caractérisé en ce que** pour une matière première amylacée constituée de céréales, l'étape de cuisson comprend au moins une étape de cisaillement.

7. Procédé selon l'une quelconque des revendications 1 à 6, **caractérisé en ce que** pour une matière première amylacée constituée de céréales, la vitesse de rotation des vis (21, 22) est supérieure à 250tr/mn.

8. Procédé selon l'une quelconque des revendications 1 à 7, **caractérisé en ce que** pendant l'étape de pompage et de refroidissement, on injecte des arômes et/ou des colorants.

9. Procédé selon l'une quelconque des revendications 1 à 8, **caractérisé en ce que** l'on injecte des arômes et/ou des colorants dans la chambre d'orientation (40).

10. Procédé selon l'une quelconque des revendications précédentes, **caractérisé en ce qu'**entre la sortie de la machine d'extrusion (20) et le moulage, on régule la température de la pâte entre 80 et 100°C.

11. Procédé selon l'une quelconque des revendications précédentes, **caractérisé en ce qu'**avant l'étape de moulage de la pâte, on retient les particules supérieures à 800 microns contenues dans cette pâte et on effectue un prémoulage de ladite pâte.

12. Procédé selon l'une quelconque des revendications précédentes, **caractérisé en ce que** pendant la phase de démarrage de la machine d'extrusion (20), on dirige la pâte à la sortie de ladite machine d'extrusion (20) vers un conduit d'évacuation (71) jusqu'au moment où la teneur en humidité de cette pâte atteint une valeur stable comprise entre 20 et 30%.

13. Installation de préparation en continu de pellets destinés à la fabrication de produits alimentaires de type snacks à texture alvéolaire et croustillante à partir d'une matière première amylacée naturelle ayant une teneur en amidon égale ou supérieure à 60% et un taux en protéines inférieur à 13%, **caractérisée en ce qu'**elle comprend :
- un préconditionneur (10) de mélange de la matière première avec de l'eau et/ou de la vapeur d'eau pour amener la teneur en humidité de ladite matière première entre 15 et 40%,
- une machine d'extrusion (20) formée de deux vis co-rotatives et co-pénétrantes entraînées en rotation à une vitesse supérieure à 200 tr/mn autour d'axes parallèles et à l'intérieur d'un fourreau de forme allongée muni d'alésages sécants, la longueur des vis étant comprise entre 32 et 48 fois le diamètre d'une desdites vis et lesdites vis (21, 22) déterminant de l'amont à l'aval:
. une zone A d'alimentation en continu dans le fourreau (23) de la matière première préconditionnée, et de transport de cette matière première,
. une zone B de cuisson de cette matière première à une température comprise entre 90 et 150°C et avec un temps de séjour de ladite matière première égal ou supérieur à 25 secondes, la longueur des vis (21, 22) dans la zone de cuisson étant comprise entre 18 et 29 fois le diamètre d'une desdites vis et cette zone de cuisson comprenant entre deux et sept éléments de vis (31) de malaxage pour obtenir une pâte cuite ayant un taux d'humidité compris entre 24 et 35%,
. une zone C de dégazage et une zone D de pompage et de refroidissement de la pâte cuite à une température comprise entre 80 et 100°C,
. une zone E de sortie de la pâte cuite de la machine d'extrusion (20) pour former un boudin continu de pâte ayant un taux d'humidité compris entre 20 et 30%,
- une chambre (40) d'orientation du boudin de pâte cuite dans une direction verticale et un sens d'écoulement de haut en bas et de régulation du fluide de la pâte,
- une chambre (50) de répartition de la pâte cuite munie, à sa sortie, d'un moule (55) à sorties multiples pour former plusieurs joncs continus ayant la forme désirée,
- des moyens (60) de découpage transversal desdits joncs pour former les pellets, et
- des moyens de séchage progressif des pellets à une température comprise entre 50 à 110°C avec un taux d'hygrométrie compris entre 40 et 80% pendant plus de trois heures pour obtenir les snacks présentant un taux d'humidité compris entre 10 et 12%.

14. Installation selon la revendication 13, **caractérisée en ce que** le fourreau (23) de la machine d'extrusion (20) comporte, au début de la zone A d'alimentation et de transport, au moins un orifice (27) d'injection d'eau pour ajuster la teneur en humidité de la pâte en fonction de la teneur en humidité de ladite pâte à obtenir à la sortie de cette machine d'extrusion (20).

15. Installation selon la revendication 14, **caractérisée en ce que** chaque élément de vis (31) de malaxage de la zone B de cuisson est formé par un élément bi-lobes (31a) en forme de losange et dont les sommets sont tronqués pour réaliser un passage contrôlé de la matière, les éléments bi-lobes (31 a) de chaque vis (21, 22) étant décalés de 90° les uns par rapport aux autres et lesdits éléments bi-lobes (31 a) des deux vis (21, 22) s'imbriquant les uns dans les autres.

16. Installation selon la revendication 15, **caractérisée en ce que** la longueur de chaque élément bi-lobes (31a) est sensiblement égale au diamètre d'une desdites vis (21, 22).

17. Installation selon l'une quelconque des revendications 13 à 16, **caractérisée en ce que** la zone B de cuisson comprend au moins un élément de cisaillement formé par des contre-filets pour une matière première amylacée constituée de céréales.

18. Installation selon l'une quelconque des revendications 13 à 17, **caractérisée en ce que** la longueur des vis (21, 22) dans les zones C et D de dégazage, de pompage et de refroidissement est comprise entre 8 et 16 fois le diamètre d'une desdites vis.

19. Installation selon l'une quelconque des revendications 13 à 18, **caractérisée en ce que** le fourreau (23) de la machine d'extrusion (20) comporte dans la zone D de pompage et de refroidissement au moins un orifice d'injection de colorants et/ou d'arômes.

20. Installation selon l'une quelconque des revendications 13 à 18, **caractérisée en ce que** la chambre (40) d'orientation comporte des moyens d'injection dans la pâte de colorants et/ou d'arômes.

21. Installation selon la revendication 13, **caractérisée en ce que** la chambre (40) d'orientation et la chambre de répartition (50) comportent des moyens de régulation de la température de la pâte entre 80 et 100°C.

22. Installation selon la revendication 13 ou 21, **caractérisée en ce que** la chambre d'orientation (40) comprend un conduit (41) en forme de coude muni de moyens (42, 43) de régulation de la distribution de la pâte.

23. Installation selon la revendication 22, **caractérisée en ce que** les moyens de régulation de la distribution de la pâte sont formés par une grille(42) disposée à l'entrée de la chambre d'orientation (40) et/ou une grille (43) disposée à la sortie de ladite chambre (40), la ou lesdites grilles s'étendant perpendiculairement au sens d'écoulement du boudin de pâte.

24. Installation selon la revendication 13 à 21, **caractérisé en ce que** la chambre de répartition (50) comprend un cône extérieur (51) évasé vers le bas et un cône intérieur (52) mâle ménageant entre eux un espace de répartition de la pâte.

25. Installation selon la revendication 13 ou 24, **caractérisée en ce que** la chambre de régulation (50) comporte au-dessus du moule (55), un filtre (53) de retenue des particules supérieures à 800 microns contenues dans la pâte et une grille de prémoulage (54) de ladite pâte.

26. Installation selon la revendication 13, **caractérisée en ce que** les moyens (60) de découpage sont formés par au moins une lame (62) entraînée en rotation et s'étendant perpendiculairement au sens de déplacement des joncs, ladite lame (62) étant placée dans un caisson (61) relié à un système de soufflage d'air réglable pour évacuer les pellets de ce caisson (61).

27. Installation selon l'une quelconque des revendications 13 à 16, **caractérisée en ce qu'**elle comporte des moyens (70) d'évacuation de la pâte à la sortie de la machine d'extrusion (20) et avant la chambre de répartition (50) jusqu'au moment où la teneur en humidité de cette pâte atteint une valeur comprise entre 20 et 30%.

28. Installation selon la revendication 27, **caractérisée en ce que** les moyens (70) d'évacuation sont formés par un conduit de dérivation (71) débouchant dans la chambre d'orientation (40) et muni d'un volet (72) déplaçable entre une position d'obturation du conduit de dérivation (71) pour diriger le boudin de pâte vers la chambre de répartition (50) et une position d'obturation du conduit (41) de la chambre d'orientation (40) pour diriger le boudin de pâte vers ledit conduit d'évacuation (71).

## Claims

1. Method for continuously preparing pellets which are intended to produce food products of the snack type with a honeycomb and crunchy texture based on an amylaceous natural raw material which has a content of amylum equal to or greater than 60% and a level of proteins of less than 13%, **characterised in that**:
- the material is pre-processed by means of adding water and/or water vapour in order to bring the moisture content of the raw material to between 15 and 40%,
- the material is continuously introduced into an extrusion machine (20) having two co-rotational and inter-engaging screws (21, 22) which are driven in rotation at a rate greater than 200 rpm about parallel axes inside a sleeve (23), the dwell time of the material in the extrusion machine being between 30 seconds and 1 minute 30 seconds,
- there are carried out successively in the sleeve (23) of the extrusion machine (20):
. a step for supplying and transporting the raw material,
. a step for baking that raw material at a temperature of between 90 and 150°C and with a dwell time for the material that is equal to or greater than 25 seconds, the baking step comprising between 2 and 5 mixing steps in order to form a paste having a moisture level of between 24 and 35%,
. a degassing step and a step for pumping and cooling the paste to a temperature of between 80 and 100°C,
- at the outlet of the extrusion machine (20), a continuous roll of paste is formed having a moisture level of between 20 and 30%,
- the paste roll is orientated in a vertical direction and a downward flow direction in an orientation chamber (40) and, at the same time, the flow of the paste is controlled,
- the paste is introduced into a distribution chamber (50) and, at the outlet of that chamber, the paste is pushed through a mould having multiple outlets in order to form a plurality of continuous bars having the desired shape,
- the bars are cut transversely in order to form the pellets having a moisture level of between 20 and 30% and
- the pellets are progressively dried at a temperature of between 50 and 110°C with a hygrometry level of between 40 and 80% for more than 3 hours in order to obtain pellets having a moisture level of between 10 and 12%.

2. Method according to claim 1, **characterised in that**, after the pellets are dried, expansion of the pellets is carried out in the presence of warm air at a temperature of approximately 250°C or in an oil bath at a temperature in the order of 180°C.

3. Method according to claim 1 or claim 2, **characterised in that** the amylaceous raw material is based on cereals and/or tubers.

4. Method according to any one of claims 1 to 3, **characterised in that** the amylaceous raw material has granulometry of between 50 and 800 micrometres.

5. Method according to claim 1, **characterised in that**, at the start of the supply and transport step, water is injected into the extrusion machine (20) in order to adjust the moisture content of the paste in accordance with the moisture content of the paste to be obtained at the outlet of the extrusion machine (20).

6. Method according to any one of claims 1 to 5, **characterised in that**, for an amylaceous raw material which is constituted by cereals, the baking step comprises at least one shearing step.

7. Method according to any one of claims 1 to 6, **characterised in that**, for an amylaceous raw material which is constituted by cereals, the rotation rate of the screws (21, 22) is greater than 250 rpm.

8. Method according to any one of claims 1 to 7, **characterised in that**, during the pumping and cooling step, flavourings and/or colourings are injected.

9. Method according to any one of claims 1 to 8, **characterised in that** flavourings and/or colourings are injected in the orientation chamber (40).

10. Method according to any one of the preceding claims, **characterised in that**, between the outlet of the extrusion machine (20) and the moulding operation, the temperature of the paste is adjusted to between 80 and 100°C.

11. Method according to any one of the preceding claims, **characterised in that**, before the step for moulding the paste, the particles greater than 800 micrometres contained **in that** paste are removed and the paste is pre-moulded.

12. Method according to any one of the preceding claims, **characterised in that**, during the start-up phase of the extrusion machine (20), the paste at the outlet of that extrusion machine (20) is directed towards a discharge pipe (71) until the time at which the moisture content of that paste reaches a stable value of between 20 and 30%.

13. Installation for continuously preparing pellets which are intended to produce food products of the snack type with a honeycomb and crunchy texture based on an amylaceous natural raw material which has a content of amylum equal to or greater than 60% and a level of proteins less than 13%, **characterised in that** it comprises:
- a pre-processor (10) for mixing the raw material with water and/or water vapour in order to bring the moisture content of the raw material to a level of between 15 and 40%,
- an extrusion machine (20) which is formed by two co-rotational and inter-engaging screws which are driven in rotation at a rate greater than 200 rpm about parallel axes inside a sleeve of elongate form which is provided with intersecting holes, the length of the screws being between 32 and 48 times the diameter of one of those screws and the screws (21, 22) defining, in a downstream direction:
. a zone A for continuously supplying pre-processed raw material to the sleeve (23) and for transporting that raw material,
. a zone B for baking that raw material at a temperature of between 90 and 150°C and with a dwell time of the raw material equal to or greater than 25 seconds, the length of the screws (21, 22) in the baking zone being between 18 and 29 times the diameter of one of those screws and that baking zone comprising between two and seven screw-type mixing elements (31) in order to obtain a baked paste which has a moisture level of between 24 and 35%,
. a zone C for degassing and a zone D for pumping and cooling the baked paste to a temperature of between 80 and 100°C,
. a zone E for discharging the baked paste from the extrusion machine (20) in order to form a continuous paste roll which has a moisture level of between 20 and 30%,
- a chamber (40) for orientating the baked paste roll in a vertical direction and in a downward flow direction and for adjusting the fluid of the paste,
- a chamber (50) for distributing the baked paste, provided at the outlet thereof with a mould (55) having multiple outlets in order to form a plurality of continuous bars having the desired shape,
- means (60) for transversely cutting the bars in order to form the pellets, and
- means for progressively drying the pellets at a temperature of between 50 and 110°C with a hygrometry level of between 40 and 80% for more than three hours in order to obtain the snacks having a moisture level of between 10 and 12%.

14. Installation according to claim 13, **characterised in that** the sleeve (23) of the extrusion machine (20) comprises, at the start of the supply and transport zone A, at least one orifice (27) for injecting water in order to adjust the moisture content of the paste in accordance with the moisture content of the paste to be obtained at the outlet of that extrusion machine (20).

15. Installation according to claim 14, **characterised in that** each screw-type mixing element (31) of the baking zone B is formed by a bi-lobed element (31a) which is in the form of a lozenge and whose peaks are truncated in order to bring about controlled passage of the material, the bi-lobed elements (31a) of each screw (21, 22) being displaced through 90° relative to each other and the bi-lobed elements (31a) of the two screws (21, 22) being imbricated one in the other.

16. Installation according to claim 15, **characterised in that** the length of each bi-lobed element (31a) is substantially equal to the diameter of one of the screws (21, 22).

17. Installation according to any one of claims 13 to 16, **characterised in that** the baking zone B comprises at least one shearing element which is formed by counter-threads for an amylaceous raw material constituted by cereals.

18. Installation according to any one of claims 13 to 17, **characterised in that** the length of the screws (21, 22) in the zones C and D for degassing, pumping and cooling is between 8 and 16 times the diameter of one of the screws.

19. Installation according to any one of claims 13 to 18, **characterised in that** the sleeve (23) of the extrusion machine (20) comprises in the pumping and cooling zone D at least one orifice for injecting colourings and/or flavourings.

20. Installation according to any one of claims 13 to 18, **characterised in that** the orientation chamber (40) comprises means for injecting colourings and/or flavourings into the paste.

21. Installation according to claim 13, **characterised in that** the orientation chamber (40) and the distribution chamber (50) comprise means for adjusting the temperature of the paste to a level of between 80 and 100°C.

22. Installation according to claim 13 or claim 21, **characterised in that** the orientation chamber (40) comprises a conduit (41) which is in the form of an elbow and which is provided with means (42, 43) for adjusting the distribution of the paste.

23. Installation according to claim 22, **characterised in that** the means for adjusting the distribution of the paste are formed by a grill (42) which is arranged at the inlet of the orientation chamber (40) and/or a grill (43) which is arranged at the outlet of the chamber (40), the grill(s) extending perpendicularly relative to the direction of flow of the roll of paste.

24. Installation according to claims 13 to 21, **characterised in that** the distribution chamber (50) comprises an external cone (51) which widens in a downward direction and an internal male cone (52) which provide between them a space for distributing the paste.

25. Installation according to claim 13 or 24, **characterised in that** the distribution chamber (50) comprises, above the mould (55), a filter (53) for retaining particles greater than 800 micrometres contained in the paste and a grill (54) for pre-moulding the paste.

26. Installation according to claim 13, **characterised in that** the cutting means (60) are formed by at least one plate (62) which is rotated and which extends perpendicularly relative to the movement direction of the bars, the plate (62) being positioned in a vessel (61) which is connected to an adjustable air-blowing system in order to discharge the pellets from the vessel (61).

27. Installation according to any one of claims 13 to 16, **characterised in that** it comprises means (70) for discharging the paste at the outlet of the extrusion machine (20) and before the distribution chamber (50) until the time at which the moisture content of this paste reaches a value of between 20 and 30%.

28. Installation according to claim 27, **characterised in that** the discharge means (70) are formed by a branch conduit (71) which opens in the orientation chamber (40) and which is provided with a flap (72) which can be moved between a position for blocking the branch conduit (71) in order to direct the roll of paste towards the distribution chamber (50) and a position for blocking the conduit (41) of the orientation chamber (40) in order to direct the roll of paste towards the discharge conduit (71).

## Patentansprüche

1. Verfahren zur kontinuierlichen Herstellung von Pellets, die für die Herstellung von Nahrungsmittelprodukten des Snack-Typs mit Schaum- und Knusper-Textur bestimmt sind, ausgehend von einem natürlichen stärkehaltigen Ausgangsmaterial mit einem Stärkegehalt von 60% oder mehr und einem Proteingehalt von weniger als 13%, **dadurch gekennzeichnet, daß** man
- eine Vorkonditionierung des Materials durch Zufuhr von Wasser und/oder Wasserdampf bewirkt, um den Feuchtigkeitsgehalt des Ausgangsmaterials auf zwischen 15 und 40% zu bringen,
- das Material kontinuierlich in eine Extrusionsvorrichtung (20) mit zwei gleichläufigen und gleichkämmenden Schnecken (21,22), die mit einer Geschwindigkeit von mehr als 200 min⁻¹ um parallele Achsen im Inneren eines Zylinders (23) angetrieben werden, einführt, wobei die Verweilzeit des Materials in der Extrusionsvorrichtung zwischen 30 Sekunden und 1 Minute und 30 Sekunden liegt,
- in dem Zylinder (23) der Extrusionsvorrichtung (20) nacheinander:
. eine Stufe der Zufuhr und des Transports des Ausgangsmaterials,
. eine Stufe des Kochens des Ausgangsmaterials bei einer Temperatur zwischen 90 und 150°C und einer Verweilzeit des Materials von 25 Sekunden oder mehr, wobei die Kochstufe zwischen zwei und fünf Stufen des Verknetens umfaßt zur Bildung eines Teigs mit einem Feuchtigkeitsgehalt zwischen 24 und 35% und
. eine Stufe des Entgasens und eine Stufe des Pumpens und Abkühlens des Teigs auf eine Temperatur zwischen 80 und 100°C durchführt,
- am Ausgang der Extrusionsvorrichtung (20) einen kontinuierlichen Strang des Teigs mit einem Feuchtigkeitsgehalt zwischen 20 und 30% bildet,
- den Teigstrang in eine vertikale Richtung mit einer Fließrichtung von oben nach unten in eine Orientierungskammer (40) umlenkt und gleichzeitig den Teigfluß reguliert,
- den Teig in eine Verteilungskammer (50) einführt und am Ausgang dieser Kammer durch ein Mundstück mit einer Vielzahl von Öffnungen preßt, um eine Vielzahl von Strängen mit der gewünschten Form zu bilden,
- die Stränge transversal schneidet zur Bildung der Pellets mit einem Feuchtigkeitsgehalt zwischen 20 und 30% und
- die Pellets progressiv bei einer Temperatur zwischen 50 und 110°C und einer 1 Luftfeuchtigkeit zwischen 40 und 80% während mehr als drei Stunden trocknet zur Bildung von Pellets mit einem Feuchtigkeitsgehalt zwischen 10 und 12%.

2. Verfahren nach Anspruch 1, **dadurch gekennzeichnet, daß** man nach dem Trocknen der Pellets eine Expansion dieser Pellets in Gegenwart von warmer Luft mit einer Temperatur von etwa 250°C in einem Ölbad mit einer Temperatur von etwa 180°C bewirkt.

3. Verfahren nach Anspruch 1 oder 2, **dadurch gekennzeichnet, daß** das stärkehaltige Ausgangsmaterial von Getreide und/oder Knollen stammt.

4. Verfahren nach einem der Ansprüche 1 bis 3, **dadurch gekennzeichnet, daß** das stärkehaltige Ausgangsmaterial eine Korngröße zwischen 50 und 800 µm aufweist.

5. Verfahren nach Anspruch 1, **dadurch gekennzeichnet, daß** man am Beginn der Stufe der Zufuhr und des Transports Wasser in die Extrusionsvorrichtung (20) einführt, um den Feuchtigkeitsgehalt des Teigs in Abhängigkeit von der Feuchtigkeit des Teigs, die man am Ausgang der Extrusionsvorrichtung (20) erzielen will, einzustellen.

6. Verfahren nach einem der Ansprüche 1 bis 5, **dadurch gekennzeichnet, daß** für ein aus Getreide gebildetes stärkehaltiges Ausgangsmaterial die Kochstufe mindestens eine Zerkleinerungsstufe umfaßt.

7. Verfahren nach einem der Ansprüche 1 bis 6, **dadurch gekennzeichnet, daß** bei einem aus Getreide gebildeten stärkehaltigen Ausgangsmaterial die Drehgeschwindigkeit der Schnecken (21,22) mehr als 250 min⁻¹ beträgt.

8. Verfahren nach einem der Ansprüche 1 bis 7, **dadurch gekennzeichnet, daß** man während der Stufe des Pumpens und Abkühlens Aromastoffe und/oder Farbstoffe einführt.

9. Verfahren nach einem der Ansprüche 1 bis 8, **dadurch gekennzeichnet, daß** man die Aromastoffe und/oder Farbstoffe in die Orientierungskammer (40) einführt.

10. Verfahren nach einem der vorhergehenden Ansprüche, **dadurch gekennzeichnet, daß** man die Temperatur des Teigs am Austritt der Extrusions- (20) und Formungs-Vorrichtung auf zwischen 80 und 100°C einstellt.

11. Verfahren nach einem der vorhergehenden Ansprüche, **dadurch gekennzeichnet, daß** man vor der Stufe des Teigformens die Teilchen mit einer Teilchengröße von mehr als 800 µm, die in diesem Teig enthalten sind, zurückhält und eine Vorformung des Teiges bewirkt.

12. Verfahren nach einem der vorhergehenden Ansprüche, **dadurch gekennzeichnet, daß** man während der Phase des Anlaufens der Extrusionsvorrichtung (20) den Teig beim Austritt aus der Extrusionsvorrichtung (20) einer Abziehleitung (71) zuführt, bis zu dem Zeitpunkt, da der Feuchtigkeitsgehalt dieses Teigs einen stabilen Wert zwischen 20 und 30% erreicht.

13. Vorrichtung zur kontinuierlichen Herstellung von Pellets, die für die Herstellung von Nahrungsmittelprodukten des Snack-Typs mit Schaum- und Knusper-Textur bestimmt sind, ausgehend von einem natürlichen stärkehaltigen Ausgangsmaterial mit einem Stärkegehalt von 60% oder mehr und einem Proteingehalt von weniger als 13%, **gekennzeichnet durch**
- eine Einrichtung (10) zur Vorkonditionierung des Ausgangsmaterials **durch** Zufuhr von Wasser und/oder Wasserdampf bewirkt, um den Feuchtigkeitsgehalt des Ausgangsmaterials auf zwischen 15 und 40% zu bringen,
- eine Extrusionsvorrichtung (20) mit zwei gleichläufigen und gleichkämmenden Schnecken (21,22), die mit einer Geschwindigkeit von mehr als 200 min-1 um parallele Achsen im Inneren eines länglichen Zylinders angetrieben werden, wobei die Länge der Schnecken das 32- bis 48-fache des Durchmessers einer der Schnecken beträgt und die Schnecken (21,22) in Förderrichtung bestimmen:
. eine Zone A für die kontinuierliche Zufuhr des vorkonditionierten Ausgangsmaterials in den Zylinder (23) und den Transport dieses Ausgangsmaterials,
. eine Zone B für das Kochen des Ausgangsmaterials bei einer Temperatur zwischen 90 und 150°C und einer Verweilzeit des Ausgangsmaterials von 25 Sekunden oder mehr, wobei die Länge der Schnecken (21,22) in der Kochzone das 18- bis 29-fache des Durchmessers einer der Schnecken beträgt und die Kochstufe zwischen zwei und sieben Schnecken-Elemente (31) für das Verkneten umfaßt, zur Bildung eines Teigs mit einem Feuchtigkeitsgehalt zwischen 24 und 35%,
. eine Zone C für das Entgasen und eine Zone D für das Pumpen und Abkühlen des Teigs auf eine Temperatur zwischen 80 und 100°C,
. eine Zone E für das Austreten des gekochten Teigs aus der Extrusionsvorrichtung (20) unter Bildung eines kontinuierlichen Strangs des Teigs mit einem Feuchtigkeitsgehalt zwischen 20 und 30%,
- eine Kammer (40) für die Orientierung des Teigstrangs in eine vertikale Richtung mit einer Fließrichtung von oben nach unten und die Regulierung des Teigflusses,
- eine Verteilungskammer (50) für den gekochten Teig, die an ihrem Austritt mit einem Mundstück (55) mit einer Vielzahl von Öffnungen versehen ist, um eine Vielzahl von Strängen mit der gewünschten Form zu bilden,
- Einrichtungen (60) zum transversalen Zerschneiden der Stränge zur Bildung der Pellets und
- Einrichtungen zum progressiven Trocknen der Pellets bei einer Temperatur zwischen 50 und 110°C und einer Luftfeuchtigkeit zwischen 40 und 80% während mehr als drei Stunden zur Bildung der Snacks mit einem Feuchtigkeitsgehalt zwischen 10 und 12%.

14. Vorrichtung nach Anspruch 13, **dadurch gekennzeichnet, daß** der Zylinder (23) der Extrusionsvorrichtung (20) am Beginn der Zone A für die Zufuhr und den Transport mindestens eine Wasserinjektionsöffnung (27) aufweist, um den Feuchtigkeitsgehalt des Teigs in Abhängigkeit von dem Feuchtigkeitsgehalt des Teigs, den man am Austritt dieser Extrusionsvorrichtung (20) erzielen will, einzustellen.

15. Vorrichtung nach Anspruch 14, **dadurch gekennzeichnet, daß** jedes Schneckenelement (31) für das Verkneten in der Kochzone B ein zweiflügliges Element (31a) in Form einer Raute aufweist. deren Scheitel abgeschrägt sind, um eine gesteuerte Förderung des Materials zu bewirken, wobei die zweiflügligen Elemente (31a) einer jeden Schnecke (21,22) um 90° gegeneinander verdreht sind, wobei die zweiflügligen Elemente (31a) der beiden Schnecken (21,22) ineinander eingreifen.

16. Vorrichtung nach Anspruch 15, **dadurch gekennzeichnet, daß** die Länge eines jeden zweiflügligen Elements (31a) im wesentlichen gleich ist dem Durchmesser einer der Schnecken (21,22).

17. Vorrichtung nach einem der Ansprüche 13 bis 16, **dadurch gekennzeichnet, daß** die Kochzone B mindestens ein durch Gegenschnecken gebildetes Zerkleinerungselement für ein aus Getreide gebildetes stärkehaltiges Ausgangsmaterial umfaßt.

18. Vorrichtung nach einem der Ansprüche 13 bis 17, **dadurch gekennzeichnet, daß** die Länge der Schnecken (21,22) in den Zonen C und D für das Entgasen und das Pumpen und Abkühlen zwischen dem 8- und 16-fachen des Durchmessers einer der Schnecken beträgt.

19. Vorrichtung nach einem der Ansprüche 13 bis 18, **dadurch gekennzeichnet, daß** der Zylinder (23) der Extrusionsvorrichtung (20) in der Zone D für das Pumpen und Abkühlen mindestens eine Öffnung für das Einführen von Farbstoffen und/oder Aromastoffen aufweist.

20. Vorrichtung nach einem der Ansprüche 13 bis 18, **dadurch gekennzeichnet, daß** die Orientierungskammer (40) Einrichtungen für das Einführen von Farbstoffen und/oder Aromastoffen in den Teig aufweist.

21. Vorrichtung nach Anspruch 13, **dadurch gekennzeichnet, daß** die Orientierungskammer (40) und die Verteilungskammer (50) Einrichtungen zur Einstellung der Temperatur des Teigs auf Werte zwischen 80 und 100°C aufweisen.

22. Vorrichtung nach Anspruch 13 oder 21, **dadurch gekennzeichnet, daß** die Orientierungskammer (40) eine Leitung (41) in Form eines Krümmers aufweist, der mit Einrichtungen (42,43) zur Steuerung der Verteilung des Teigs versehen ist.

23. Vorrichtung nach Anspruch 22, **dadurch gekennzeichnet, daß** die Einrichtungen zur Steuerung der Verteilung des Teigs durch ein Gitter (42) gebildet sind, das am Eintritt der Orientierungskammer (40) angeordnet ist und/oder durch ein Gitter (43), das am Austritt der Kammer (40) vorgesehen ist, wobei das oder die Gitter sich senkrecht zu der Fließrichtung des Teigstrangs erstrecken.

24. Vorrichtung nach Anspruch 13 bis 21, **dadurch gekennzeichnet, daß** die Verteilungskammer (50) einen sich nach unten öffnenden Außenkegel (51) und einen erhabenen Innenkegel (52) aufweist, die gemeinsam einen Verteilungsraum für den Teig bilden.

25. Vorrichtung nach Anspruch 13 oder 24, **dadurch gekennzeichnet, daß** die Verteilungskammer (50) oberhalb des Mundstücks (55) einen Filter (53) aufweist, mit dem Teilchen größer als 800 µm, die in dem Teig enthalten sind, zurückgehalten werden, und ein Gitter für das Vorvermahlen (54) des Teigs.

26. Vorrichtung nach Anspruch 13, **dadurch gekennzeichnet, daß** die Einrichtungen (60) zum Zerschneiden durch mindestens eine sich drehende Klinge (62) gebildet werden, die sich senkrecht zu der Förderrichtung des Stranges erstreckt, welche Klinge (62) in einem Behälter (61) angeordnet ist, der mit einem System zum steuerbaren Einführen von Luft verbunden ist, um die Pellets aus diesem Behälter (61) abzuführen.

27. Vorrichtung nach einem der Ansprüche 13 bis 16, **dadurch gekennzeichnet, daß** sie Einrichtungen (70) am Austritt der Extrusionsvorrichtung (20) und vor der Verteilungskammer (50) aufweist zum Abziehen des Teigs bis zu dem Zeitpunkt, da sein Feuchtigkeitsgehalt einen Wert zwischen 20 und 30% erreicht hat.

28. Vorrichtung nach Anspruch 27, **dadurch gekennzeichnet, daß** die Abzieheinrichtungen (70) durch eine Zweigleitung (71) gebildet sind, die in der Orientierungskammer (40) endet und mit einer Klappe (72) versehen ist, die zwischen einer Position des Verschließens der Zweigleitung (71), um den Teigstrang in die Verteilungskammer (50) zu führen und einer Position des Verschließens der Leitung (41) der Orientierungskammer (40), zur Steuerung des Teigs zu der Abziehleitung (71) umgeschaltet werden kann.
